# EUROPÄISCHE PATENTANMELDUNG

(11) **EP 1 842 971 A2**
(43) Veröffentlichungstag der Anmeldung: **10.10.2007**
(21) Anmeldenummer: 07104776.5
(22) Anmeldetag: 23.03.2007
(51) Int. Cl.: E03B 9/06

(54) **Hydranten-Plombe**

(30) Priorität: 07.04.2006 CH 5762006
(71) Anmelder: vonRoll infratec (investment) ag, 6300 Zug (CH)
(72) Erfinder: Flury, Christoph, 4702, Oensingen (CH); Nielsen, Maick, 4524, Günsberg (CH)
(74) Vertreter: OK pat AG

(57) **Zusammenfassung**

Betrifft eine Plombe (1) für an Wasserverteilungsnetze angeschlossene Hydranten (2), die entweder einen Schutzdeckel (3) zum Abdecken von Bedienungsorganen (4) für Ventilspindeln umfassen, wobei der Schutzdeckel (3) einen Verschlussknopf (5) mit einem Bedienungsvierkant (6) umfasst. Betrifft zudem eine Plombe (1) für an Wasserverteilungsnetze angeschlossene Hydranten (2), die keinen Schutzdeckel (3) zum Abdecken eines Bedienungsorgans (4) für Ventilspindeln umfassen, wobei das Bedienungsorgan (4) einen frei zugänglichen Bedienungsvierkant (6) umfasst. Die erfindungsgemässen Plomben (1) sind dadurch gekennzeichnet, dass sie eine Wand (7), einen inneren Hohlraum (8) und Verriegelungselemente (9) umfassen, wobei eine über den Bedienungsvierkant (6) eines Hydrantenschutzdeckels (3) gestülpte Plombe (1) direkt auf diesem Bedienungsvierkant (6) sitzt und diesen im wesentlichen umschliesst, und wobei Verriegelungselemente (9) der Plombe (1) unlösbar in entsprechende Einsenkungen (10,11) des Bedienungsvierkants (6) eingeschnappt sind, wodurch die Plombe (1) mit dem Bedienungsvierkant (6) mechanisch verriegelt und ohne deren Zerstörung nicht mehr wegnehmbar ist.

## Beschreibung

Die vorliegende Erfindung betrifft eine Plombe für an Wasserverteilungsnetze angeschlossene Hydranten. Gemäss dem Oberbegriff des unabhängigen Anspruchs 1 umfassen solche Hydranten einen Schutzdeckel zum Abdecken von Bedienungsorganen für Ventilspindeln, wobei der Schutzdeckel einen Verschlussknopf mit einem Bedienungsvierkant umfasst. Gemäss dem Oberbegriff des unabhängigen Anspruchs 2 umfassen solche Hydranten keinen Schutzdeckel zum Abdecken eines Bedienungsorgans für Ventilspindeln, wobei das Bedienungsorgan einen frei zugänglichen Bedienungsvierkant umfasst.

Hydranten sind schon seit langer Zeit und in sehr vielen unterschiedlichen Ausführungen bekannt. Sie dienen in erster Linie als Armaturen zur Wasserentnahme aus einem öffentlichen Versorgungsnetz und beliefern beispielsweise die Feuerwehr mit Löschwasser. Es sind hauptsächlich zwei verschiedene Ausführungen bekannt, nämlich der Unterflurhydrant und der Überflurhydrant. Beide können aus einem 1- oder 2-teiligen Mantelrohr, bzw. Ventilgehäuse bestehen, welches beispielsweise mit seinem unteren Ende an eine Versorgungsleitung angeschlossen werden kann. Innenseitig weisen Hydranten mindestens eine Absperrung auf, die als Ventil ausgebildet ist. Zum Betätigen, bzw. Öffnen und Schliessen dieses Ventils oder Abschlusses kann eine von aussen betätigbare, drehbare Spindel dienen, welche als Teil einer Innengarnitur zumeist im wesentlichen axial im Hydranten verläuft. Oft weisen Hydranten eine Betätigungsstange auf, welche im Deckel oder Mantelrohr gelagert ist und eine, am Mantelrohr axial geführte, Spindelmutter bewegt (vgl. beispielsweise Fig. 1 in CH 675 139 A5). Ein Verbindungsrohr kann die Bewegung der Spindel auf das Ventil übertragen. Zur Verhinderung von Frostschäden durch sich ausdehnendes, gefrierendes Wasser weisen solche Hydranten üblicherweise ein Entwässerungssystem auf, durch welche das nach dem Verschliessen des Ventils im Mantelrohr verbleibende Wasser abfliessen kann. Ein Überflurhydrant kann z.B. als freistehende Säule bzw. als an oder zumindest teilweise in einer Gebäudewand angeordnete Armatur ausgebildet sein. Ein Hydrant kann zudem einen oder mehrere Wasseranschlüsse, die seitlich am Hydranten angeordnet sind, umfassen. Die zusätzlichen Wasseranschlüsse können mit eigenen Absperrorganen, sogenannten Nebenabsperrventilen, ausgerüstet sein, so dass jeder Wasseranschluss individuell geöffnet und geschlossen werden kann (vgl. z.B. DE 199 39 113 A1).

Mindestens ein lösbarer Schutzdeckel schliesst vorzugsweise den Hydranten an seiner Oberseite ab. Dieser Schutzdeckel verdeckt den Zugang zu den Spindelverlängerungen, die mit den Ventilspindeln mechanisch verbunden sind und an ihrem oberen Ende einen Vierkant aufweisen. Der Brunnenmeister, die Feuerwehr oder andere Wasserbezüger können das Hauptventil und allfällige Nebenventile des Hydranten öffnen, indem sie jeweils ein geeignetes Werkzeug, z.B. einen Vierkantschlüssel auf den Vierkant der entsprechenden Spindelverlängerung des zu öffnenden Ventils aufsetzen. Sie können dies aber erst tun, wenn der Schutzdeckel des Hydranten geöffnet ist. Dieser Schutzdeckel weist einen Verschlussknopf auf, der ebenfalls als Vierkant ausgebildet ist und der mit dem gleichen Vierkantschlüssel gegen die Kraft einer Verschlussfeder verdreht werden kann. Das Verdrehen des Verschlussknopfs öffnet zugleich den Schutzdeckel und gibt den Zugang zu den Spindelverlängerungen frei (vgl. beispielsweise Fig. 1 in CH 675 139 A5). Einfachere Hydranten mit beispielweise nur einem Hauptventil (vgl. beispielsweise Fig. 1 von DE 197 57 581 A1) und keinen Nebenabsperrventilen weisen an ihrer Oberseite einen Bedienungsvierkant auf, welcher mit der Verlängerung der Hauptventilspindel in Verbindung steht und üblicherweise nicht durch einen Schutzdeckel abgedeckt ist. Früher wurden Hydranten hauptsächlich als Zapfstellen für Flüssigkeiten, vorzugsweise Wasser, für Feuerwehrzwecke oder Sprinkleranlagen in der Landwirtschaft, verwendet. Heute dagegen, sind Hydranten ein integrierender Bestandteil moderner öffentlicher Trinkwasserversorgungen. So werden sie jetzt vermehrt für Aufgaben wie die Wasserentnahme durch öffentliche oder private Verbraucher, das Herstellung von provisorischen Verbindungen bei Fremdeinspeisung ins Rohrleitungsnetz, das Be- und Entlüften des Rohrleitungsnetzes und das Spülen des Rohrleitungsnetzes aus hygienischen Gründen eingesetzt. Es wird nun immer wichtiger, die widerrechtliche Wasserentnahme durch nicht autorisierte Bezüger zu verhindern oder mindestens zu erschweren.

Die Aufgabe der vorliegenden Erfindung ist es, eine Vorrichtung vorzuschlagen, welche die widerrechtliche Wasserentnahme durch nicht autorisierte Bezüger verhindert oder mindestens erschwert.

Diese Aufgabe wird gemäss einem ersten Aspekt durch die Merkmale des unabhängigen Anspruchs 1 gelöst, indem eine Plombe vorgeschlagen wird für an Wasserverteilungsnetze angeschlossene Hydranten, die einen Schutzdeckel zum Abdecken von Bedienungsorganen für Ventilspindeln umfassen, wobei der Schutzdeckel einen Verschlussknopf mit einem Bedienungsvierkant umfasst. Erfindungsgemäss ist diese Plombe dadurch gekennzeichnet, dass sie eine Wand, einen inneren Hohlraum und Verriegelungselemente umfasst, wobei eine über den Bedienungsvierkant eines Hydrantenschutzdeckels gestülpte Plombe direkt auf diesem Bedienungsvierkant sitzt und diesen im wesentlichen umschliesst. Dabei sind Verriegelungselemente der Plombe unlösbar in entsprechende Einsenkungen des Bedienungsvierkants eingeschnappt, wodurch die Plombe mit dem Bedienungsvierkant mechanisch verriegelt und ohne deren Zerstörung nicht mehr wegnehmbar ist.

Diese Aufgabe wird gemäss einem zweiten Aspekt durch die Merkmale des unabhängigen Anspruchs 2 gelöst, indem eine Plombe vorgeschlagen wird für an Wasserverteilungsnetze angeschlossene Hydranten, die keinen Schutzdeckel zum Abdecken eines Bedienungsorgans für Ventilspindeln umfassen, wobei das Bedienungsorgan einen frei zugänglichen Bedienungsvierkant umfasst. Erfindungsgemäss ist diese Plombe dadurch gekennzeichnet, dass sie eine Wand, einen inneren Hohlraum und Verriegelungselemente umfasst, wobei eine über den Bedienungsvierkant eines Bedienungsorgans gestülpte Plombe direkt auf diesem Bedienungsvierkant sitzt und diesen im wesentlichen umschliesst, und wobei Verriegelungselemente der Plombe unlösbar in entsprechende Einsenkungen des Bedienungsvierkants eingeschnappt sind, wodurch die Plombe mit dem Bedienungsvierkant mechanisch verriegelt und ohne deren Zerstörung nicht mehr wegnehmbar ist.

Diese erfindungsgemässen Plomben für an Wasserverteilungsnetze angeschlossene Hydranten werden mittels schematischen, den Umfang der Erfindung nicht einschränkenden Zeichnungen an Hand von beispielhaften Ausführungsformen näher erläutert. Dabei zeigen:
- Fig. 1: einen vertikalen Teilschnitt durch einen aus dem Stand der Technik bekannten, typischen Hydranten mit einem Hauptabsperrventil und zwei Nebenabsperrventilen sowie einem Schutzdeckel;
- Fig. 2: einen vertikalen Teilschnitt durch eine auf den Bedienungsvierkant des Schutzdeckels oder eines Bedienungsorgans eines Hydranten aufgesetzten Plombe, gemäss einer ersten und zweiten Ausführungsform;
- Fig. 3: einen vertikalen Teilschnitt durch eine auf den Bedienungsvierkant des Schutzdeckels oder eines Bedienungsorgans eines Hydranten aufgesetzten Plombe, gemäss einer dritten Ausführungsform;
- Fig. 4: einen vertikalen Teilschnitt durch eine auf den Bedienungsvierkant des Schutzdeckels oder eines Bedienungsorgans eines Hydranten aufgesetzten Plombe, gemäss einer vierten Ausführungsform;
- Fig. 5: einen vertikalen Teilschnitt durch eine auf den Bedienungsvierkant des Schutzdeckels oder eines Bedienungsorgans eines Hydranten aufgesetzten Plombe, gemäss einer fünften Ausführungsform;
- Fig. 6: einen vertikalen Teilschnitt durch eine auf den Bedienungsvierkant des Schutzdeckels oder eines Bedienungsorgans eines Hydranten aufgesetzten Plombe, gemäss einer sechsten Ausführungsform;
- Fig. 7: einen horizontalen Teilschnitt durch eine auf den Bedienungsvierkant des Schutzdeckels oder eines Bedienungsorgans eines Hydranten aufgesetzten Plombe, gemäss der in Fig. 2 gezeigten ersten und zweiten Ausführungsform;
- Fig. 8: einen horizontalen Teilschnitt durch eine auf den Bedienungsvierkant des Schutzdeckels oder eines Bedienungsorgans eines Hydranten aufgesetzten Plombe, gemäss der in Fig. 3 gezeigten dritten Ausführungsform;
- Fig. 9: einen horizontalen Teilschnitt durch eine auf den Bedienungsvierkant des Schutzdeckels oder eines Bedienungsorgans eines Hydranten aufgesetzten Plombe, gemäss einer ersten Variante der in Fig. 4 gezeigten vierten Ausführungsform;
- Fig. 10: einen horizontalen Teilschnitt durch eine auf den Bedienungsvierkant des Schutzdeckels oder eines Bedienungsorgans eines Hydranten aufgesetzten Plombe, gemäss einer zweiten Variante der in Fig. 4 gezeigten vierten Ausführungsform;
- Fig. 11: einen horizontalen Teilschnitt durch eine auf den Bedienungsvierkant des Schutzdeckels oder eines Bedienungsorgans eines Hydranten aufgesetzten Plombe, gemäss einer ersten und zweiten Variante der in Fig. 5 gezeigten fünften Ausführungsform;
- Fig. 12: einen horizontalen Teilschnitt durch eine auf den Bedienungsvierkant des Schutzdeckels oder eines Bedienungsorgans eines Hydranten aufgesetzten Plombe, gemäss der in Fig. 6 gezeigten sechsten Ausführungsform.

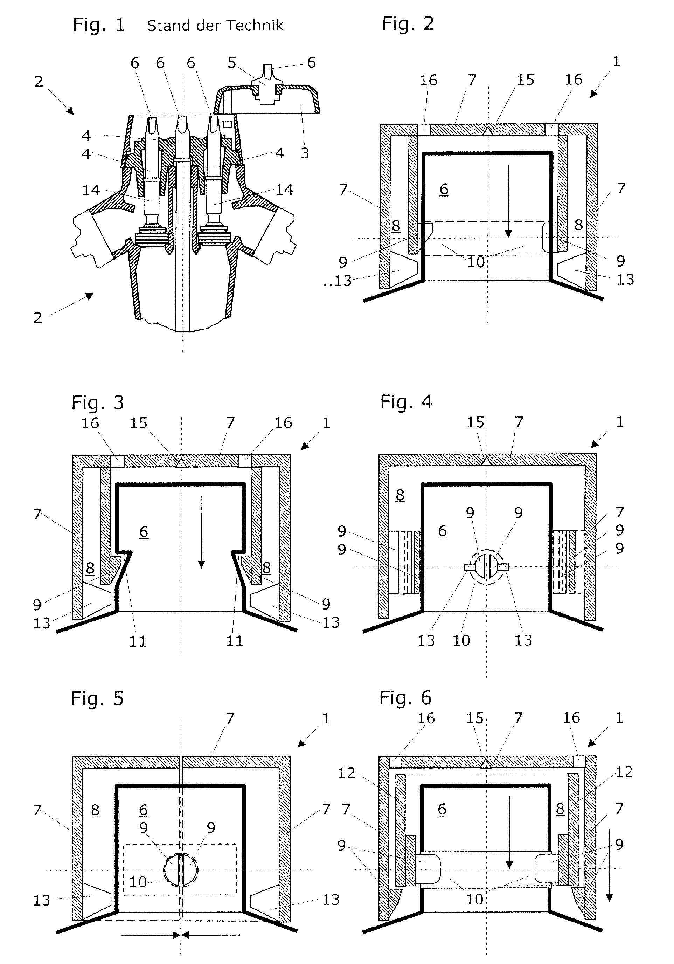

Figur 1 zeigt einen vertikalen Teilschnitt durch einen aus dem Stand der Technik bekannten, typischen Hydranten 2 zum Anschliessen an Wasserverteilungsnetz. Dieser Hydrant 2 weist ein Hauptabsperrventil und zwei Nebenabsperrventile sowie einen Schutzdeckel 3 auf. Dieser Schutzdeckel 3 dient zum Abdecken der Bedienungsorgane 4 für die insgesamt drei Ventilspindeln dieses Hydranten. Die beiden Ventilspindeln 14 der Nebenabsperrventile sind hier sichtbar. Der geöffnet gezeichnete Schutzdeckel 3 umfasst einen Verschlussknopf 5 mit einem Bedienungsvierkant 6. Im geschlossenen Zustand deckt der Schutzdeckel 3 alle mit je einem Bedienungsvierkant 6 ausgerüsteten Bedienungsorgane 4 ab, so dass diese nicht mehr zugänglich und auch nicht sichtbar sind. Diese Bedienungsorgane 4 sind damit auch weitgehend vor Witterungseinflüssen und vor Manipulationen Unberechtigter geschützt.

Wie bereits ausgeführt, sind auch für an Wasserverteilungsnetze angeschlossene Hydranten 2 bekannt, die keinen Schutzdeckel 3 zum Abdecken eines Bedienungsorgans 4 für Ventilspindeln umfassen (nicht gezeigt); dabei umfasst üblicherweise das Bedienungsorgan 4 einen frei zugänglichen Bedienungsvierkant 6.

Figur 2 zeigt einen vertikalen Teilschnitt durch eine auf den Bedienungsvierkant 6 des Schutzdeckels 3 oder eines Bedienungsorgans 4 eines Hydranten 2 aufgesetzten Plombe 1, gemäss einer ersten und zweiten Ausführungsform. Die Plombe 1 umfasst eine Wand 7, einen inneren Hohlraum 8 und Verriegelungselemente 9. Diese Verriegelungselemente 9 können gemäss einer ersten Ausführungsform als schmale, stegförmige Haken (vgl. linke Seite) oder gemäss einer zweiten Ausführungsform als runde Bolzen (vgl. rechte Seite) ausgeführt sein. Eine weitere Variante stellt eine Kombination von Haken und Bolzen dar, indem der Bolzen einseitig abgeschrägt ist, wobei die Verjüngung wie auch beim Haken in die Aufsteckrichtung der Plombe zeigt. Diese Aufsteckrichtung ist in Fig. 2 durch einen Pfeil markiert. Eine über den Bedienungsvierkant 6 eines Hydrantenschutzdeckels 3 oder eines Bedienungsorgans 4 gestülpte Plombe 1 sitzt direkt auf diesem Bedienungsvierkant 6 und umschliesst diesen im wesentlichen. Eine möglichst vollständige Abdeckung des Bedienungsvierkants 6 hat den Vorteil, dass die Beschaffenheit der Plombe 1, insbesondere deren Verriegelungsmechanismus nicht sichtbar und deshalb auch nicht manipulierbar ist. Verriegelungselemente 9 der Plombe 1 sind unlösbar in entsprechende Einsenkungen 10 des Bedienungsvierkants 6 eingeschnappt. Dabei sind diese Einsenkungen 10 vorzugsweise als Sacklöcher oder als ein einziges Durchgangsloch in den Bedienungsvierkant 6 gebohrt.

Diese Einsenkungen 10 bzw. diese Bohrungen sind sowohl bei bereits im Feld montierten Hydranten als auch bei neuen, noch nicht montierten Hydranten einfach anbringbar. Das Bohren der besonders bevorzugten Durchgangsbohrung an bereits bestehenden Hydranten 2 wird durch eine auf den Bedienungsvierkant 6 aufsteckbare, an die geometrischen Verhältnisse der Plombe 1 angepasste Bohrlehre (nicht gezeigt) erleichtert. Diese Einsenkungen 10 verhindern effektiv, dass eine aufgesetzte Plombe 1 einfach wieder vom Bedienungsvierkant 6 abgezogen werden kann. Die Plombe 1 ist somit mit dem Bedienungsvierkant 6 mechanisch verriegelt und kann ohne deren Zerstörung nicht mehr weggenommen werden.

Vorzugsweise ist die Plombe 1 aus einem extrem spröden Material gefertigt, welches dank der besonderen Formgebung gerade so flexibel ist, dass beim Aufsetzen der Plombe auf einen Bedienungsvierkant 6 die Verriegelungselemente 9 in die Einsenkungen 10 so einschnappen können, dass die Plombe 1 unbeschädigt ist. Lange federnde oder elastische Teile erleichtern das Erfüllen dieser Forderung. Speziell bevorzugt ist die Verwendung von spröden Materialien wie Kunststoffen, keramischen oder glasartigen Werkstoffen und Verbundwerkstoffen derselben. Das Herstellen geschieht bevorzugt mittels Spritzgiessen. Die Geometrie der Plombe ist bevorzugt so auf die Geometrie des abzudeckenden Bedienungsvierkants 6 und die verwendeten spröden Materialien abgestimmt, dass jeder Versuch, die Plombe vom Bedienungsvierkant 6 wieder zu entfernen zur Zerstörung der Plombe 1 führen muss. Die Brüchigkeit der Plombe 1 wird vorzugsweise durch das Anbringen von bevorzugt kerbenförmigen Sollbruchstellen 15 zusätzlich erhöht. Spritzgegossene Plomben 1 weisen naturgemäss Schieberöffnungen 16 auf, die beim Spritzgussprozess zwangsweise entstehen. Bevorzugt sind diese Schieberöffnungen 16 so angeordnet, dass die Verriegelungselemente 9 - deren Entstehung sie ermöglichen - nicht durch diese Schieberöffnungen 16 hindurch manipuliert werden können. Um einen korrekten Sitz der Plombe 1 auf dem Bedienungsvierkant 6 zu gewährleisten, kann die Plombe zusätzlich mit Zentrierelementen 13 versehen sein.

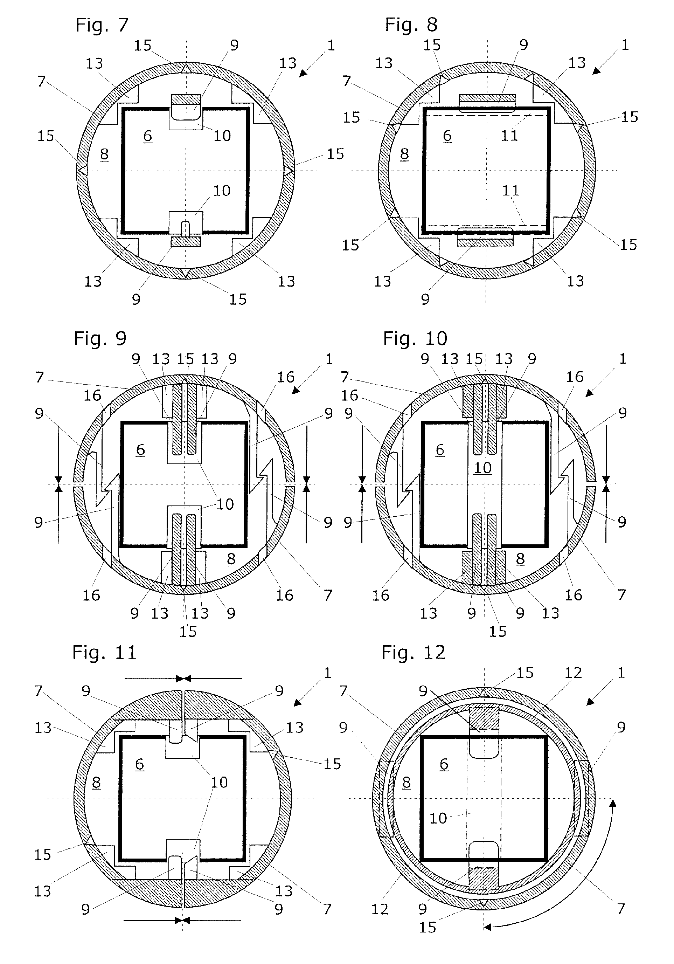

Figur 7 zeigt einen horizontalen Teilschnitt durch eine auf den Bedienungsvierkant des Schutzdeckels oder eines Bedienungsorgans eines Hydranten aufgesetzten Plombe, gemäss der in Fig. 2 gezeigten ersten und zweiten Ausführungsform. Besonders gut sichtbar sind hier die in Sacklöcher 10 eingreifenden, als Haken (unten) oder Bolzen (oben) ausgebildeten Verriegelungselemente 9 und die hier mit den Ecken des Bedienungsvierkants 6 zusammenwirkenden Zentrierelemente 13. Aus dieser Darstellung wird die bevorzugt zylindrisch ausgebildete, äussere Form der Plombe 1 offensichtlich. Sollten zur Wasserentnahme unberechtigte Personen versuchen, mit einem Werkzeug (zum Beispiel mit einer Zange) den Bedienungsvierkant 6 mit der aufgesetzten Plombe 1 zu bewegen, so wird diese Plombe 1 gequetscht und in mehrere Teile zerbrechen. Die Anzahl dieser Teile und die Empfindlichkeit der Plombe kann durch das Anbringen und die geometrische Ausgestaltung von Sollbruchstellen 15 beeinflusst werden.

Figur 3 zeigt einen vertikalen Teilschnitt durch eine auf den Bedienungsvierkant 6 des Schutzdeckels 3 oder eines Bedienungsorgans 4 eines Hydranten 2 aufgesetzten Plombe 1, gemäss einer dritten Ausführungsform. Diese Plombe 1 ist einstückig ausgebildet und umfasst zumindest zwei hakenförmige Verriegelungselemente 9, die bei einer über den Bedienungsvierkant 6 eines Hydrantenschutzdeckels 3 oder eines Bedienungsorgans 4 gestülpten Plombe 1 zumindest auf zwei gegenüberliegenden Seiten des Bedienungsvierkants 6 in Hinterschnitte 11 schnappend eingreifen.

Figur 8 zeigt einen horizontalen Teilschnitt durch eine auf den Bedienungsvierkant 6 des Schutzdeckels 3 oder eines Bedienungsorgans 4 eines Hydranten 2 aufgesetzten Plombe 1, gemäss der in Fig. 3 gezeigten dritten Ausführungsform. Besonders gut sichtbar sind hier die in Hinterschnitte 11 eingreifenden, als Haken ausgebildeten Verriegelungselemente 9 und die hier mit den Ecken des Bedienungsvierkants 6 zusammenwirkenden Zentrierelemente 13. Die Sollbruchstellen 15 sind hier in einer alternativen Anordnung zu sehen.

Figur 4 zeigt einen vertikalen Teilschnitt durch eine auf den Bedienungsvierkant 6 des Schutzdeckels 3 oder eines Bedienungsorgans 4 eines Hydranten 2 aufgesetzten Plombe 1, gemäss einer vierten Ausführungsform. Diese Plombe 1 ist zweistückig ausgebildet. Dabei sind beide Teilstücke der Plombe 1 gleichzeitig einander gegenüberliegend am Bedienungsvierkant 6 eines Hydrantenschutzdeckels 3 oder eines Bedienungsorgans 4 so befestigbar, dass ein bolzenförmiges Verriegelungselement 9 jedes Teilstücks in eine Aussparung 10 im Bedienungsvierkant 6 eingreift. Diese bolzenförmigen Verriegelungselemente stellen somit die mechanische Verbindung zum Bedienungsvierkant 6 sicher. Zudem nehmen zwei hakenförmige Verriegelungselemente 9 eines ersten Teilstücks der Plombe 1 mit den beiden gegenüberliegenden hakenförmigen Verriegelungselementen 9 des anderen Teilstücks der Plombe 1 einschnappend eine gegenseitige Verriegelungsstellung ein.

Figur 9 zeigt einen horizontalen Teilschnitt durch eine auf den Bedienungsvierkant 6 des Schutzdeckels 3 oder eines Bedienungsorgans 4 eines Hydranten 2 aufgesetzten Plombe 1, gemäss einer ersten Variante der in Fig. 4 gezeigten vierten Ausführungsform. Besonders gut sichtbar sind hier die zwei hakenförmige Verriegelungselemente 9 des ersten Teilstücks der Plombe 1 (oben) mit den beiden gegenüberliegenden hakenförmigen Verriegelungselementen 9 des anderen Teilstücks der Plombe 1 (unten) einschnappend eine gegenseitige Verriegelungsstellung einnehmen. Besonders bevorzugt sind die beiden Teilstücke der Plombe 1 identisch zueinander ausgebildet, so dass nur eine einzige Spritzgussform zum Herstellen dieser Plombe 1 benötigt wird. Die bolzenförmigen Verriegelungselemente 9 sind zweigeteilt, weil eine Sollbruchstelle 15 zwischen den Bolzenhälften verläuft. Wie bereits in Fig. 4 angedeutet, sind an den Seiten dieser Bolzenhälften stegförmige Zentrierelemente 13 angeordnet, welche das Spiel einer aufgesetzten Plombe 1 gegenüber dem Bedienungsvierkant 6 verringern. Die sich am Bedienungsvierkant 6 gegenüberliegenden Aussparungen 10 sind hier als Sacklöcher gezeigt. Jeweils ein hakenförmiges Verriegelungselement 9 verläuft in geringem Abstand zum Bedienungsvierkant 6, was ebenfalls eine Stabilisierung der Plombe 1 bewirkt. Gleichzeitig wird jeweils das damit wechselwirkende, hakenförmige Verriegelungselement 9 des anderen Teilstücks der Plombe 1 gezwungen, federnd auszuweichen. Die Pfeile markieren die Einsteckrichtungen der beiden Teilstücke der Plombe 1.

Figur 10 zeigt einen horizontalen Teilschnitt durch eine auf den Bedienungsvierkant 6 des Schutzdeckels 3 oder eines Bedienungsorgans 4 eines Hydranten 2 aufgesetzten Plombe 1, gemäss einer zweiten Variante der in Fig. 4 gezeigten vierten Ausführungsform. Wie in Fig. 4 nicht gezeigt, sind an den Seiten dieser Bolzenhälften bolzenförmige Zentrierelemente 13 angeordnet, welche das Spiel einer aufgesetzten Plombe 1 gegenüber dem Bedienungsvierkant 6 verringern. Die sich am Bedienungsvierkant 6 gegenüberliegenden Aussparung 10 sind hier als durchgehendes Bohrloch gezeigt.

Figur 5 zeigt einen vertikalen Teilschnitt durch eine auf den Bedienungsvierkant 6 des Schutzdeckels 3 oder eines Bedienungsorgans 4 eines Hydranten 2 aufgesetzten Plombe 1, gemäss einer fünften Ausführungsform. Diese Plombe 1 zweistückig ausgebildet, wobei beide Teilstücke der Plombe 1 gleichzeitig oder nacheinander sich gegenüberliegend am Bedienungsvierkant 6 eines Hydrantenschutzdeckels 3 oder eines Bedienungsorgans 4 so befestigbar sind, dass zwei sich gegenüberliegende, bolzen- und/oder hakenförmige Verriegelungselemente 9 jedes Teilstücks in zwei entsprechende, im Bedienungsvierkant 6 sich gegenüber liegend angeordnete Aussparungen 10 einschnappend eingreifen und eine gegenseitige Verriegelungsstellung einnehmen.

Figur 11 zeigt einen horizontalen Teilschnitt durch eine auf den Bedienungsvierkant 6 des Schutzdeckels 3 oder eines Bedienungsorgans 4 eines Hydranten 2 aufgesetzten Plombe 1, gemäss einer ersten und zweiten Variante der in Fig. 5 gezeigten fünften Ausführungsform. Besonders bevorzugt sind die beiden Teilstücke der Plombe 1 identisch zueinander ausgebildet, so dass nur eine einzige Spritzgussform zum Herstellen dieser Plombe 1 benötigt wird. Die bolzenförmigen Verriegelungselemente 9 sind zweigeteilt, weil je eine Bolzenhälfte einem ersten oder einem zweiten Teilstück der Plombe 1 zugeordnet ist. Die Pfeile markieren die Einsteckrichtungen der beiden Teilstücke der Plombe 1, wie bereits in Fig. 5 angedeutet. Diese Bolzenhälften sind gemäss einer ersten Variante als Halbzylinder (links) oder gemäss einer zweiten Variante (rechts) als Haken mit schräger Stirnfläche ausgebildet. Diese schräge Stirnfläche erleichtert das Einsetzen bzw. Aufsetzen der Teilstücke der Plombe 1, welche sich in ihrer Endlage mit eingeschnappten Bolzenhälften gegenseitig stabilisieren. Zusätzliche Zentrierelemente 13 können gegenüber den Ecken des Bedienungsvierkants angeordnet werden und verringern das Spiel einer aufgesetzten Plombe 1 gegenüber dem Bedienungsvierkant 6. Die sich am Bedienungsvierkant 6 gegenüberliegenden Aussparungen 10 sind hier als Sacklöcher gezeigt. Abweichend von dieser Darstellung könnten sie aber auch als Durchgangsbohrung ausgebildet sein.

Figur 6 zeigt einen vertikalen Teilschnitt durch eine auf den Bedienungsvierkant 6 des Schutzdeckels 3 oder eines Bedienungsorgans 4 eines Hydranten 2 aufgesetzten Plombe 1, gemäss einer sechsten Ausführungsform. Diese Plombe 1 ist zweistückig ausgebildet, wobei ein erstes Teilstück der Plombe 1 einen Ring 12 mit zwei einander gegenüberliegenden, bolzen- und/oder hakenförmigen Verriegelungselementen 9 umfasst. Dieser Ring wird zuerst über den Bedienungsvierkant 6 gestülpt und so platziert, dass diese Verriegelungselemente 9 in im Bedienungsvierkant 6 sich gegenüber liegend angeordneten Aussparungen 10 einschnappend eingreifen. Vorzugsweise ist dieses erste Teilstück der Plombe 1 aus einem elastischen Material hergestellt. Speziell bevorzugt ist, dass die Verriegelungselemente 9 so lange bolzenförmige Fortsätze tragen, dass sich diese beim Quetschen dieses ersten Teilstücks der Plombe 1 gerade ganz aus den entsprechenden Aussparungen 10 heraus bewegen. Derartig ausgebildete, quetschbare ersten Teilstücke der Plombe 1 könnten immer wieder verwendet werden. Ein zweites, zwei hakenförmige Verriegelungselemente 9 umfassendes Teilstück der Plombe 1 ist so über das erste Teilstück stülpbar, dass die beiden hakenförmigen Verriegelungselemente 9 am ersten Teilstück der Plombe 1 einschnappend eine Verriegelungsstellung einnehmen. Auch dieses "Einschnappen" wird durch die Elastizität des ersten Teilstücks begünstigt, indem dieses beim Aufsetzen des zweiten Teilstücks einfach ausweicht. Das zweite Teilstück ist bei dieser sechsten Ausführungsform vorzugsweise aus einem spröden Material ausgebildet. Auch hier können kerbenförmige Sollbruchstellen 15 das Zerstören der Plombe erleichtern.

Figur 12 zeigt einen horizontalen Teilschnitt durch eine auf den Bedienungsvierkant 6 des Schutzdeckels 3 oder eines Bedienungsorgans 4 eines Hydranten 2 aufgesetzten Plombe 1, gemäss der in Fig. 6 gezeigten sechsten Ausführungsform. Hier ist ganz deutlich zu sehen, wie gross die Ausweichmöglichkeiten des inneren Ringes 12 beim Überstülpen des äusseren Teilstücks dieser Plombe 1 sind. Zudem ist ersichtlich, dass beim Fehlen des spröden äusseren Teilstückes der innere Ring durch seitliches Quetschen (hier: links und rechts) so deformiert werden kann, dass die beiden zapfen- oder bolzenförmigen Verriegelungselemente 9 auf beiden Seiten aus der Durchgangsbohrung 10 herausgezogen werden.

Ein Vorteil dieser sechsten Ausführungsform besteht darin, dass der von aussen zugänglich Teil der Plombe 1 frei drehbar ist (markiert durch den Doppelpfeil in Fig. 12); es besteht somit keine mechanisch blockierte Verbindung zwischen den beiden Plombenteilen. Ein weiterer Vorteil besteht darin, dass das sprödbrüchige, äussere Teilstück der Plombe keinerlei federnde Eigenschaften aufweisen muss. Zudem ist der äussere, zweite und zum Zerstören bestimmte Teil der Plombe sehr einfach ausgebildet und kostengünstig herstellbar. Die beiden Teile dieser Plombe 1 können unterschiedlich gefärbt sein, so dass das Fehlen des äusseren Teilstücks der Plombe 1 durch einen Farbunterschied zum inneren Teilstück, welches möglicherweise noch am Bedienungsvierkant 6 sitzt, verdeutlicht wird.

Falls dazu berechtigte Personen, seien dies Brunnenmeister, Feuerwehrleute und andere, dem Hydranten Wasser entnehmen wollen, müssen diese Personen die Plombe 1 zerstören. Dies kann durch ein gezieltes Aufschlagen mit dem Schlüssel zum Bedienen des Hydranten oder mit einem anderen, beliebigen Werkzeug geschehen. Nach einer ordnungsgemässen Wasserentnahme aus dem Hydranten 2, können entsprechend autorisierte Personen (z.B. der Brunnenmeister) den Hydranten 2 durch Aufsetzen einer Plombe 1 wieder plombieren. Vorzugsweise ist die Plombe so gefärbt, dass diese weithin sichtbar ist und so den Fachpersonen anzeigt, dass dieser plombierte Hydrant betriebsbereit und in Ordnung ist. Insbesondere nach einer Revision des Hydranten ist das Anzeigen der Betriebsbereitschaft durch eine weithin sichtbare Plombe von Vorteil. Die Sichtbarkeit der ohnehin zumeist zuoberst auf einem Hydranten sitzenden Plombe 1 kann durch die Färbung mit grellen Tagesleuchtfarben verbessert werden. In der Nacht lumineszierende, d.h. leuchtende oder Licht reflektierende Plomben 1 können zudem die Auffindbarkeit des Hydranten im Notfall verbessern.

Andernfalls zeigt eine fehlende bzw. zerstörte Plombe an, dass Wasser aus einem Hydranten entnommen wurde. Für den Brunnenmeister ist es darnach ein Leichtes herauszufinden, ob dieser Wasserbezug berechtigt gewesen ist oder nicht. Auch sie wenn nicht in jedem Falle beschrieben sind, so bezeichnen die gleichen Bezugszeichen entsprechende Elemente.

Weitere Kombinationen der gezeigten oder beschriebenen Elemente gehören zum Umfang der vorliegenden Erfindung.

### Bezugszeichen:

- 1: Plombe
- 2: Hydrant
- 3: Schutzdeckel
- 4: Bedienungsorgane
- 5: Verschlussknopf
- 6: Bedienungsvierkant
- 7: Wand
- 8: innerer Hohlraum
- 9: Verriegelungselemente
- 10: Einsenkung, Aussparung
- 11: Einsenkung, Hinterstich
- 12: Ring
- 13: Zentrierelement
- 14: Ventilspindel des Nebenabsperrventils
- 15: Sollbruchstelle
- 16: Schieberöffnung

## Patentansprüche

1. Plombe (1) für an Wasserverteilungsnetze angeschlossene Hydranten (2), die einen Schutzdeckel (3) zum Abdecken von Bedienungsorganen (4) für Ventilspindeln umfassen, wobei der Schutzdeckel (3) einen Verschlussknopf (5) mit einem Bedienungsvierkant (6) umfasst, **dadurch gekennzeichnet, dass** die Plombe (1) eine Wand (7), einen inneren Hohlraum (8) und Verriegelungselemente (9) umfasst, wobei eine über den Bedienungsvierkant (6) eines Hydrantenschutzdeckels (3) gestülpte Plombe (1) direkt auf diesem Bedienungsvierkant (6) sitzt und diesen im wesentlichen umschliesst, und wobei Verriegelungselemente (9) der Plombe (1) unlösbar in entsprechende Einsenkungen (10,11) des Bedienungsvierkants (6) eingeschnappt sind, wodurch die Plombe (1) mit dem Bedienungsvierkant (6) mechanisch verriegelt und ohne deren Zerstörung nicht mehr wegnehmbar ist.

2. Plombe (1) für an Wasserverteilungsnetze angeschlossene Hydranten (2), die keinen Schutzdeckel (3) zum Abdecken eines Bedienungsorgans (4) für Ventilspindeln umfassen, wobei das Bedienungsorgan (4) einen frei zugänglichen Bedienungsvierkant (6) umfasst, **dadurch gekennzeichnet, dass** die Plombe (1) eine Wand (7), einen inneren Hohlraum (8) und Verriegelungselemente (9) umfasst, wobei eine über den Bedienungsvierkant (6) eines Bedienungsorgans (4) gestülpte Plombe (1) direkt auf diesem Bedienungsvierkant (6) sitzt und diesen im wesentlichen umschliesst, und wobei Verriegelungselemente (9) der Plombe (1) unlösbar in entsprechende Einsenkungen (10,11) des Bedienungsvierkants (6) eingeschnappt sind, wodurch die Plombe (1) mit dem Bedienungsvierkant (6) mechanisch verriegelt und ohne deren Zerstörung nicht mehr wegnehmbar ist.

3. Plombe (1) nach Anspruch 1 oder 2, **dadurch gekennzeichnet, dass** sie einstückig ausgebildet ist und zumindest zwei bolzen- und/oder hakenförmige Verriegelungselemente (9) umfasst, die bei einer über den Bedienungsvierkant (6) eines Hydrantenschutzdeckels (3) oder eines Bedienungsorgans (4) gestülpten Plombe (1) zumindest auf zwei gegenüberliegenden Seiten des Bedienungsvierkants (6) in Aussparungen (10) oder in Hinterstiche (11) schnappend eingreifen.

4. Plombe (1) nach Anspruch 1 oder 2, **dadurch gekennzeichnet, dass** sie zweistückig ausgebildet ist, wobei beide Teilstücke der Plombe (1) gleichzeitig einander gegenüberliegend am Bedienungsvierkant (6) eines Hydrantenschutzdeckels (3) oder eines Bedienungsorgans (4) so befestigbar sind, dass ein bolzenförmiges Verriegelungselement (9) jedes Teilstücks in eine Aussparung (10) im Bedienungsvierkant (6) eingreift und zwei hakenförmige Verriegelungselemente (9) eines ersten Teilstücks der Plombe (1) mit den beiden gegenüberliegenden hakenförmigen Verriegelungselementen (9) des anderen Teilstücks der Plombe (1) einschnappend eine gegenseitige Verriegelungsstellung einnehmen.

5. Plombe (1) nach Anspruch 1 oder 2, **dadurch gekennzeichnet, dass** sie zweistückig ausgebildet ist, wobei beide Teilstücke der Plombe (1) gleichzeitig oder nacheinander sich gegenüberliegend am Bedienungsvierkant (6) eines Hydrantenschutzdeckels (3) oder eines Bedienungsorgans (4) so befestigbar sind, dass zwei sich gegenüberliegende, bolzen- und/oder hakenförmige Verriegelungselemente (9) jedes Teilstücks in zwei entsprechende, im Bedienungsvierkant (6) sich gegenüber liegend angeordnete Aussparungen (10) einschnappend eingreifen und eine gegenseitige Verriegelungsstellung einnehmen.

6. Plombe (1) nach einem der Ansprüche 4 oder 5, **dadurch gekennzeichnet, dass** die beiden Teilstücke der Plombe (1) identisch zueinander ausgebildet sind.

7. Plombe (1) nach Anspruch 1 oder 2, **dadurch gekennzeichnet, dass** sie zweistückig ausgebildet ist, wobei ein erstes Teilstück der Plombe (1) einen Ring (12) mit zwei einander gegenüberliegenden, bolzen- und/oder hakenförmigen Verriegelungselementen (9) umfasst, die bei einem am Bedienungsvierkant (6) eines Hydrantenschutzdeckels (3) oder eines Bedienungsorgans (4) befestigten ersten Teilstück in im Bedienungsvierkant (6) sich gegenüber liegend angeordneten Aussparungen (10) einschnappend eingreifen, und wobei ein zweites, zwei hakenförmige Verriegelungselemente (9) umfassendes Teilstück der Plombe (1) so über das erste Teilstück stülpbar ist, dass die beiden hakenförmigen Verriegelungselemente (9) am ersten Teilstück der Plombe (1) einschnappend eine Verriegelungsstellung einnehmen.

8. Plombe (1) nach einem der Ansprüche 3 bis 7, **dadurch gekennzeichnet, dass** die Plombe (1) bzw. deren Teilstücke und aus einem spröden Material ausgebildet ist bzw. sind.

9. Plombe (1) nach Anspruch 7, **dadurch gekennzeichnet, dass** das erste Teilstück und aus einem elastischen Material und das zweite Teilstück aus einem spröden Material ausgebildet ist.

10. Plombe (1) nach einem der Ansprüche 3 bis 9, **dadurch gekennzeichnet, dass** die beiden, auf zwei gegenüberliegenden Seiten des Bedienungsvierkants (6) angeordneten Aussparungen (10) als eine den Bedienungsvierkant (6) durchdringende Bohrung ausgebildet sind.

11. Verwendung einer Plombe (1) nach einem der Ansprüche 1 bis 10 zum Signalisieren des einwandfreien Betriebszustandes eines Hydranten.

12. Verwendung einer Plombe (1) nach einem der Ansprüche 1 bis 10 zum Anzeigen eines widerrechtlichen Wasserbezuges von einem Hydranten.
